# EUROPÄISCHE PATENTANMELDUNG

(11) **EP 0 744 385 A2**
(43) Veröffentlichungstag der Anmeldung: **27.11.1996**
(21) Anmeldenummer: 96105443.4
(22) Anmeldetag: 05.04.1996
(51) Int. Cl.: C04B 14/06

(54) **Anorganische Bindemittel und Cristobalit enthaltende Zusammensetzung**

(30) Priorität: 06.04.1995 DE 19512548
(71) Anmelder: Scheller, Georg, 50129 Bergheim (DE)
(72) Erfinder: Scheller, Georg, 50129 Bergheim (DE)

(57) **Zusammenfassung**

Die Erfindung bezieht sich auf Mischungen bestehend aus anorganischen Bindemitteln, Polymeren und deren Copolymeren, Zuschlags-, Hilfs- und Füllstoffen wie z.B. Abbinderbeschleuniger und Abbindeverzögerer, Schrumpfkompensatoren, Fließmittel, Wasserbindemittel, Anti-Schaummittel, Pigmente und Cristobalit. Durch die Zugabe von Cristobalt in schnellstreagierende Bindemittelsystemen werden eine Reihe vorteilhafte Eigenschaften erreicht, die insbesondere bei schnellstreagierenden Fließestrichen von Vorteil sind wie z.B. geringere Ansatzwasser, erhöhte Fließfähigkeit, höhere Reaktivität, schnelleres Trocknen, verminderte Rißbildung und erhöhte mechanische Werte. Bestandteil der Erfindung ist auch, daß die beschriebenen Eigenschaften deutlicher werden, je kleiner die Teilchengröße. Es besteht bei Kleinstkorngrößen des Cristobalits im Bereich von 0,5 bis 50 nanometer die Gefahr der Silikose und damit die Unbenutzbarkeit der Erfindung in diesem Bereich. Um die Gefahr der Silikose zu verbannen, wird Cristobalit in Kleinstkorngrößen d.h. in einer bevorzugten Ausführungsform der Erfindung, in Pastenform als Zwei- oder Mehrkomponentensystem eingesetzt.

## Beschreibung

Die Erfindung bezieht sich auf eine anorganische Bindemittel enthaltende Zusammensetzung, ein Verfahren zu deren Herstellung sowie deren Verwendung für schnellsthärtende Fließestriche.

Im Bauwesen überzieht man bekanntermaßen eine fehlerhafte, mit Schadstellen versehene Fläche wie etwa eine rohe Betonplatte oder einen teilweise beschädigten Fußboden unter Verwendung eines hydraulischen Bindemittels mit einem dünnen etwa 3 bis 30 mm starken Überzug, üblicherweise einem Estrich.

Mit derartigen Überzügen wird beabsichtigt, eine ebene Oberfläche herzustellen, die danach gegebenenfalls mit einem abschließenden Überzug versehen werden kann, wenn dies dem Verwender erforderlich oder wünschenswert erscheint.

Zur Bereitstellung eines derartigen Überzugs oder Estrichs streicht man die mit Wasser angemachte Zusammensetzung aus, die nach Abbinden aushärtet und eine freie ebene Fläche darstellt.

Es ist aus praktischen Gründen wünschenswert, daß diese Überzugsschichten möglichst schnell aushärten, insbesondere um die Fläche schnell wieder in Gebrauch nehmen zu können. Nach der Begehbarkeit wird die Fläche beschichtet und ist wenig später auch mit Maschinen befahrbar.

Man kann eine glatte, ebene und schnellhärtende Fläche erhalten, indem Zusammensetzungen eingesetzt werden, die ein schnelles Abbindevermögen besitzen. Diese Komponenten müssen eine ausreichend geringe Viskosität besitzen, so daß sie bei ihrem Auftrag auf eine Unterlage aufgrund der Schwerkraft zusammenlaufen.

Die Viskosität dieser Zusammensetzung ist daher ein maßgeblicher Parameter, aber er kann die Abbindegeschwindigkeit des Überzugs verlängern.

Eine weitere wichtige Eigenschaft für den angesprochenen Überzug ist die Selbstglättung. Sie ist direkt abhängig von der Form und der Größe der Füllstoffe, die in dem Material enthalten sind. Je geringer deren Reibungswiderstand ist, desto leichter fließen die angemischten Zusammensetzungen beim Auftragen zusammen. Daher verwendet man im allgemeinen Stoffe mit einer definierten Teilchengrößenverteilung und vor allem solche, die keine wesentlichen Ecken oder Kanten aufweisen. Stoffe mit lamellenartigem Aussehen sind insbesondere geeignet.

Die bisher bekannten Zusammensetzungen, die als schnellhärtende Überzüge im Bauwesen eingesetzt wurden, besitzen jedoch auch erhöhte Neigung zu Rißbildung in dem Endprodukt. Vor allem die zu schnelle Entfernung des in dem hydraulischen Bindemittel enthaltenen Wassers und die durch den schnellen Abbindungsprozeß entstehende Wäre verursachen eine beschleunigte Schrumpfung des Produkts beim Abbinden, wodurch die unerwünschte Rißbildung auftritt. Durch die Rißbildung ist der Grundstein für schwerwiegende Beschädigungen in dem Überzug gelegt.

Es ist daher die Aufgabe der Erfindung, einen besseren Füllstoff für Fließestrichmischungen bereitzustellen, die beschleunigt abbinden, eine optimale Viskosität besitzen und deren Tendenz zur Rißbildung stark vermindert ist.

Diese Aufgabe wird mit einer anorganischen Bindemittel enthaltenden Zusammensetzung gelöst, die Cristobalit mit einer mittleren Teilchengröße zwischen 0,5 und 500 µm enthält. Cristobalit wird dazu im allgemeinen als Pulver eingesetzt. Vorzugsweise wird Cristobalit mit einer Reinheit von 85 bis 95 Gew.-% verwendet.

Es wurde nun überraschend gefunden, daß der Gehalt an Cristobalit mit der beschriebenen Korngröße der erfindungsgemäßen, anorganische Bindemittel enthaltenden Zusammensetzung insbesondere vorteilhafte Eigenschaften verleiht, wenn sie durch verbesserte Viskosität, kurzzeitiges Abbindevermögen und gleichzeitig eine geringe Schrumpfung und reduzierte Rißbildungstendenz aufweisen soll. Diese Eigenschaften sind insbesondere für schnellsthärtende Fließestriche höchst wünschenswert.

In dieser Ausführungsform ist es von maßgeblicher Bedeutung, den Cristobalit mit einer Korngröße im Bereich von 0,5 bis 500 µm zu verwenden. Dadurch wird der Zusammensetzung eine große Homogenität verliehen.

Die erfindungsgemäße Zusammensetzung, der der cristobalithaltige Füllstoff zugegeben wird, besteht im allgemeinen aus anorganischen Bindemitteln. Unter anorganischem Bindemittel soll im Sinne der Erfindung jeder Stoff verstanden werden, der mit einem Mehrkomponentengemisch abbindet oder mit diesen Komponenten ein homogenes Gefüge bildet. Das Abbinden kann durch Trocknen, Erstarren, chemische Reaktion oder Hydratisierung erfolgen. Bei der Herstellung von dünnwandigen Überzügen im Bauwesen kann dabei grundsätzlich jedes in der Technik bekannte anorganische Bindemittel verwendet werden. Es kann sich dabei um hydraulische, nichthydraulische und latenthydraulische Bindemittel handeln. Im allgemeinen werden als hydraulische Bindemittel Zemente, als nichthydraulische Bindemittel, Gips, Anhydrid oder Magnesitbinder und als latenthydraulische Bindemittel Hochofenschlacke eingesetzt.

Zementarten, wie Zementklinker, Portlandzement, Hüttenzemente (z.B. Nochofenzemente), Kalzium Alluminate ( Fondu ) und Puzzolanzemente (wie natürliche und künstliche Puzzolane, Traß, Flugasche, Schmelzgranulat) sind Beispiele verwendbarer hydraulischer anorganischer Bindemittel. Sorelzement (Magnesiazement) ist insbesondere für Fußbodenbeläge in Innenräumen geeignet. Die Erfindung ist jedoch nicht auf diese Zemente beschränkt. Weitere Arten sind dem Fachmann bekannt. Es wird insbesondere auf die DIN-Normen DIN 1164, DIN 1168 und DIN 51043 verwiesen.

In Zusammensetzungen, in denen eine schnelle Aushärtung erwünscht ist, wird üblicherweise auch ein Schnellzement (Fondu Lafarge) eingesetzt. Schnell- oder Blitzzemente sind durch ihre kurze Verarbeitungszeit und schnelles Abbindevermögen gekennzeichnet. Unter Schnellzement sollen in diesem Zusammenhang alle schnellhärtenden aluminatreichen Zementarten verstanden werden, die in der Technik als HAC-Zemente bekannt sind. Diese werden beispielsweise von J. Bensted, in "High alumina cement", ZEMENT-KALK-GIPS, **46**, 560-566 beschrieben. Der üblicherweise in den oben angesprochenen Zusammensetzungen verwendete Schnellzement oder Blitzzement, kann insbesondere ein aluminatreicher, CaF₂-haltiger Zement oder ein Tonerdezement sein. Er besitzt ein besonders hohen Aluminiumoxidgehalt, der im Bereich von 30 bis 80 Gew.-% Al₂O₃ liegt, erhärtet sehr schnell und entwickelt eine hohe Hydratationswärme, ist nach Erhärtung sehr widerstandsfähig gegen Korrosion und Temperatureinflüsse.

Vorzugsweise enthält die Zusammensetzung auch organische und anorganische Zusätze, die die Dichte und Widerstandsfähigkeit des abgebundenen Produktes erhöhen. Der Zusatzstoff kann aus den bekannten Betondichtungsmitteln ausgewählt werden. Es sind jedoch auch andere Polymere geeignet. Nichteinschränkende Beispiele sind Polymere mit Ethylen-, Propylen-, Acrylat-, Methacrylat-, Styrol-, Vinyl-, Vinylacetat-, Vinylchlorid-, Butadien-, Epoxid-, Urethaneinheiten, Melamin-, Latex-, Siliconharze, und glasfaserverstärkten Kunststoffen sowie deren Mischungen.

Ferner können weitere Zuschlag-, Hilfs- und Füllstoffe eingesetzt werden. Diese sind in der Technik gut bekannt. Nichteinschränkende Beispiele sind Abbindebeschleuniger wie Lithiumcarbonat oder dessen Mischung mit Natriumgluconat, Fließmittel, wie Casein, Anti-Schrumpfungsmittel, wie Gips (CaSO₄ · 2 H₂O) oder Anhydrid, Wasserbindemittel, Anti-Schaummittel und Pigmente.

Die Anteile dieser Zusatzstoffe in der Zusammensetzung müssen genau abgestimmt werden, da sie zum Teil antagonistische Wirkungen auf die Eigenschaften der Zementmischung haben. Vorteilhafte Konzentrationen sind den Ausführungsbeispielen entnehmbar.

Für den Auftrag muß die Zusammensetzung pumpbar und selbstglättend sein, was auf herkömmlichen Mörtel nicht zutrifft, der eine zu hohe Viskosität aufweist. Durch den Einsatz des cristobalithaltigen Füllstoffs, der eine lamellenartige Struktur aufweist, in dem erwähnten Korngrößebereich wird auch die Fließfähigkeit des Frischmörtels verbessert, so daß bei gleichem Ausbreitmaß während des Auftragens, verglichen mit einem bekannten Mörtel, eine erheblich geringere Wassermenge eingesetzt werden kann, was mit einer vorteilhaften Materialersparnis und folglich verringerten Kosten verbunden ist.

Ein weiterer Vorteil der erfindungsgemäßen Zusammensetzung ist ihr schnelles Abbindevermögen. Wird die erfindungsgemäße Zusammensetzung als Fließestrich verwendet, erhält man eine um etwa 30 % beschleunigte Aushärtung. Schon nach etwa 2 bis 3 Stunden nach dem Ausstreichen des Fließestrichs ist dieser begehbar und kann nach 4 Stunden beschichtet und nach weiteren 20 Stunden von schweren Geräten und Maschinen befahren werden.

Durch die Zugabe des cristobalithaltigen Füllstoffes wurde auch ein Anstieg der Druckfestigkeit eines aus der erfindungsgemäßen Zusammensetzung hergestellten schnellhärtenden Fließestrichs um etwa 15 bis 25 % festgestellt.

Ein weiterer Vorteil besteht darin, daß Wasser von Cristobalit erst nach ca. 20 bis 30 Minuten gebunden wird, so daß das Pulver-Wasser-Gemisch problemlos aufgetragen werden kann.
Eine bevorzugte Zusammensetzung für einen schnellhärtenden Fließestrich nach der Erfindung besteht aus:
- 5 bis 10 Gew.-%: Zement,
- 15 bis 20 Gew.-%: Schnellzement,
- 20 bis 25 Gew.-%: Sandzuschlag,
- 5 bis 10 Gew.-%: Calciumsulfat,
- 1 bis 5 Gew.-%: organisches Bindemittel auf Harzbasis,
- 2 bis 5 Gew.-%: Pigment,
- 1 bis 5 Gew.-%: Hilfsstoffe
- 10 bis 40 Gew.-%: Cristobalit.

Diese Zusammensetzung wird mit 4,50 - 5,00 Liter Wasser gemischt.

Ein erfindungsgemäß insbesondere bevorzugter Füllstoff besteht aus Cristobalit mit einer mittleren Korngrößenverteilung im Bereich von 80 bis 200 µm.

Das getrocknete Material besitzt so gut wie kein Kristallwasser mehr. Die mit der erfindungsgemäßen Zusammensetzung hergestellten Fließestriche sind sehr leicht und besitzen eine verschleißfeste Oberfläche, die infolge ihrer Schnellsthärtung in kürzester Zeit begehbar, beschichtbar und befahrbar ist.

Eine erfindungsgemäß insbesondere bevorzugte Zusammensetzung besteht aus:
- 13 Gew.-%: einer wäßrigen Dispersion aus flüssigem Epoxidharz,
- 10 Gew.-%: eines wasserhaltigen Polyaminoamids,
- 5 Gew.-%: Wasser,
- 7 Gew.-%: Zement,
- 12 Gew.-%: Schnellzement (Fondu),
- 18 Gew.-%: Sandzuschlag,
- 3,5 Gew.-%: Calciumsulfat,
- 1,5 Gew.-%: Pigment,
- 1,5 Gew.-%: Hilfsstoff und
- 28,5 Gew.-%: Cristobalit.

Die erforderliche Cristobalitmenge kann der erfindungsgemäßen Zusammensetzung als Pulver mit einer Teilchengröße von 0,5 bis 500 µm zugesetzt werden.

Werden Teilchengrößen unter 50 µm, insbesondere unter 45 µm verwendet, bestand bei herkömmlichen Zuschlagstoffen die Gefahr der Feinststaubbildung. Dieser Feinststaub ist als eine Ursache der sogenannten Silikose erkannt worden. Das Betriebspersonal, das mit Cristobalit einer Teilchengröße unter 45 µm umgeht, ist also einer nicht zu unterschätzenden Gesundheitsgefährdung ausgesetzt. Diese Gefahr kann gemäß dem Verfahren der Erfindung vermieden werden, indem der Cristobalit zusammen mit einem geeigneten Dispersionsmittel zugegeben wird. Unter Dispersionsmittel soll im Sinne der vorliegenden Erfindung jeder Stoff verstanden werden, in dem die Cristobalitcharge fein verteilt werden kann. Es kann sich also um Feststoffe, Flüssigkeiten und Gase handeln. Es ist somit klar, daß bei Vermischen des Cristobalits mit einer Flüssigkeit eine Suspension entsteht und das Mittel als Suspensionsmittel anzusprechen ist. Durch die Wirkung des Dispersions- oder Suspensionsmittels wird die Feinststaubbildung vermieden und es können daher Korngrößen des Cristobalits im Bereich von 0,5 bis 50 µm eingesetzt werden.

Gemäß einer bevorzugten Ausführungsform der Erfindung wird der Cristobalit in Pastenform als Zwei- oder Mehrkomponentensystem eingesetzt.

Geeignete Dispersions- oder Suspensionsmittel für diesen Zweck können anorganische oder organische Lösemittel, Harze wie die vorstehend erwähnten Polymere oder Copolymere, Weichmacher sowie Tenside sein.
Als Lösemittel sind beispielsweise Wasser, Alkohole wie Methanol, Ethanol, Propanole, Butanole, Octanole, oder Cyclohexanol, Ether wie Diethylether, Methyl-tert.-butylether, oder Tetrahydrofuran, Acetale wie 1,1-Dimethoxyethan oder 1,3-Dioxolan, Glykole wie Ethylenglykol, oder Propylenglykol, Glykolether, wie Ethylenglykoldimethyl- oder -diethylether, Propylenglykoldimethyl- oder -diethylether, Aldehyde, wie Formaldehyd, Acetaldehyd, Ketone, wie Aceton, Ester wie Methyl- oder Ethylacetat, halogenierte und nicht halogenierte Kohlenwasserstoffe, wie Methylenchlorid, Trichlorethylen, 1,1,1-Trichlorethan, n-Hexan, Cyclohexan, 1-Hexen, Toluole oder Xylole, stickstoffhaltige Lösemittel, wie Ammoniak, Dimethylformamid, Pyridin, N-Methylpyrrolidon, Acetonitril, oder Nitrobenzol, und schwefelhaltige Lösemittel, wie Schwefelkohlenstoff oder Dimethylsulfoxid (DMSO) sowie deren verträgliche Mischungen geeignet. Andere gut bekannte Lösemittel sind ebenfalls verwendbar.

Tenside wie kationische, anionische oder amphotere Tenside, beispielsweise geradkettige und cyclische Ammoniumverbindungen, Benzalkoniumchloride, quartäre Ammoniumchloride, Pyridiniumsalze, Alkylphenolpolyglykolether, Fettsäure-, Fettsäureamid-, Fettalkoholethoxylate, Fettsäureester von Polyalkoholen, Betaine und Sultaine, sowie deren Mischungen sind ebenso einsetzbar, wenn dies gewünscht wird.

Es wurde auch gefunden, daß der Zusatz von Cristobalit zu einem Weichmacher, dessen vorteilhafte Wirkungen verstärkt. Als Weichmacher für die cristobalithaltige Paste können die dem Fachmann bekannten Klassen verwendet werden. Nichteinschränkende Beispiele sind Phthalsäureester, wie Di-2-ethylhexylphthalat (DOP), Diisodecylophthalat (DIDP), Dibutylphthalat (DBP), Diisobutylphthalat (DIBP) und Dicyclohexylphthalat (DCHP), Trimellitsäureester, wie Tri-(2-ethylhexyl)-trimellitat (TOTM), Triisononyltrimellitat (TINTM), aliphatische Dicarbonsäureester, wie Di-2-ethylhexyladipat (DOA), Diisodecyladipat (DIDA), Dibutylsebacat (DBS), Di-2-ethylhexylsebacat (DOS), Phosphorsäureester, wie Trikresylphosphat (TCF), Triphenylphosphat (TPF), Diphenyl-2-ethylhexylphosphat (DPOF), Tri-(2-ethylhexyl)phosphat (TOF), Fettsäureester, insbesondere Fettsäureglykolester, Hydroxycarbonsäureester, insbesondere Citrate und Lactate, epoxidierte Fettsäureester und Triglyceride, Benzolsulfonamide, p-Toluolsulfonamide und Polyester aus Adipin-, Sebacin-, Azelain- und Phthalsäure mit Diolen wie 1,2-Propandiol, 1,3-Butandiol, 1,4-Butandiol oder 1,6-Hexandiol sowie deren verträgliche Mischungen.

Zur Herstellung der Paste wird Cristobalit mit dem gewählten Dispersions- oder Suspensionsmittel vermischt. Dabei ist insbesondere vorteilhaft, daß die Korngrößen auf einen Bereich von 0,5 bis 50 µm abgesenkt werden können, ohne daß es der oben erwähnte Feinstaub entsteht. Eine derartige Paste kann der anorganische Bindemittel enthaltenden Zusammensetzung zugesetzt werden.
Die erfindungsgemäßen Zusammensetzungen können auch in Form eines Konzentrats, enthaltend Cristobalit, Additive, Hilfsstoffe, Harze und Wasser, bereitgestellt werden, das zur Anwendung mit Wasser auf eine Konzentration von 3 : 1 bis 1 : 1 verdünnt wird.

Dieses verdünnte Konzentrat wird anschließend mit den restlichen Komponenten der erfindungsgemäßen Zusammensetzung (Zement, Schnellzement, Sandzuschlag, Calciumcarbonat, Anhydrid und Gips) im Verhältnis 1 : 5 bis 1 : 15 gemischt.

Anschließend wird die Erfindung in Form von Ausführungsbeispielen beschrieben, ohne auf diese beschränkt zu sein.

Die Zusammensetzungen der Beispiele 1 bis 3 wurden entsprechend der Tabelle I bis III angesetzt und zu schnellhärtenden Fließestrichen verarbeitet. Die einzelnen Bestandteile der erfindungsgemäßen Zusammensetzungen wurden, wenn gewünscht, in zwei Schritten vermischt:

Zuerst wird das erfindungsgemäße Konzentrat hergestellt, enthaltend:
- 25,00 kg: Cristobalit
- 9,00 kg: Wasser
- 1,88 kg: Kunstharzdispersionspulver
- 1,13 kg: Antischaummittel
- 0,37 kg: Casein (Flüssigkeitsregulator)
- 0,17 kg: Tylose H20P (Tensid)
- 0,08 kg: Lithiumcarbonat
- 0,10 kg: Natrium Gluconat

Dieses Konzentrat wird zur Verwendung mit 9 Liter Wasser verdünnt und zu den Füllstoffen, enthaltend:
- 27,0 kg: Sand
- 17,0 kg: Calzium Alluminat
- 14,0 kg: Calciumcarbonat
- 5,5 kg: Portlandzement
- 3,5 kg: Anhydrid
- 3,5 kg: Gipsdihydrat

Die Mischung wurde mit einem "Lödige"-Mixer mit Turbomessern 7 Minuten lang durchgeführt.

In Phase 2 und 3 wurde das Konzentrat dem Mixer 3 Minuten nach Zugabe der Füllstoffe zugeführt. Das Gesamtgemisch wurde höchstens 4 Minuten lang vermischt.

Es wurden die folgenden Untersuchungen durchgeführt, um die Eigenschaften der erfindungsgemäßen Zusammensetzungen zu bestimmen.

Von den erfindungsgemäßen Zusammensetzungen wurden jeweils Proben von 15 kg entnommen. Innerhalb von 90 Minuten wurden die folgenden Untersuchungen vorgenommen.

Das Pulver wurde optisch untersucht und dessen Homogenität festgestellt.

Das Schüttvolumen wurde gemessen.

Zur Messung der Dichte der Probe wurde diese mit einer vorgeschriebenen Menge an klarem Wasser vermischt. Nach vollständiger Zugabe des Pulvers in das Wasser wurde das Gemisch in einem Labormischer 3 Minuten lang vermengt. Dann wurde die Dichte des Gemischs gemessen.

Ein erster Teil dieser Charge wurde zur Messung der Viskosität entnommen. Die Temperatur des Pulvers und des Wasser betrugen ca. 20 °C. Die Verarbeitungszeit wird durch die Abbindezeit bestimmt. Diese entspricht der Zeit, zu der das Viskosimeter zum Stillstand kommt. Die erfindungsgemäßen Zusammensetzungen besitzen eine Verarbeitungszeit von etwa 25 ± 5 Minuten.

Ein zweiter Teil der Probenmischung wird zur Messung des Verlaufens beim Ausstreichen verwendet. Im CSTB-Test betrug die Ausbreitung etwa 23 ± 1 cm. Der Versuch wurde weitere 30 Minuten durchgeführt, indem alle 10 Minuten das rheologische Verhalten des Estrichs während der Fließphase festgestellt wurde.

Der Rest des Überzugs wurde auf eine Platte gegossen und auf das Oberfläche mit einer Glättungsscheibe verteilt und mit einem Rechen gleichmäßig ausgestrichen. Das Verhalten der Mischung wurde hinsichtlich der Homogenität und des Fließverhaltens beim Verteilen beurteilt.

Eine abschließende Auswertung wurde am nächsten Tag durchgeführt, indem die Oberfläche des Überzugs auf Vertiefungen und Schadstellen untersucht wurde.

Die weiteren Eigenschaften des Fließestrichs gemäß dem o.g. Beispiel sind wie folgt:

| | |
|---|---|
| Rohdichte (nach DIN): | 2,1 kg/dm³ |
| Begehbarkeit (20 °C, gute Belüftung): | 2 Stunden |
| Belastbarkeit (20 °C, gute Belüftung): | 24 Stunden |
| Schichtstärke (je nach Bedarf): | 5 bis 15 mm |
| Druckfestigkeit (28 Tage): | 30,00 N/mm² |
| Biegezugfestigkeit (28 Tage): | 9,60 N/mm² |
| Elastizitätsmodul (28 Tage): | 19200 N/mm² |

## Patentansprüche

1. Anorganische Bindemittel enthaltende Zusammensetzung, dadurch gekennzeichnet daß sie Cristobalit mit einer mittleren Teilchengrößen von 0,5 bis 500 µm enthält..

2. Zusammensetzung nach Anspruch 1, dadurch gekennzeichnet, daß sie Cristobalit mit einer mittleren Teilchengröße von 0,5 bis 50 µm enthält.

3. Zusammensetzung nach Anspruch 1 oder 2, dadurch gekennzeichnet, daß der Cristobalit lamellenartige Struktur aufweist.

4. Zusammensetzung nach einem der vorhergehenden Ansprüchen, dadurch gekennzeichnet, daß der Cristobalit eine Reinheit von 85 bis 95 Gew.-% aufweist..

5. Zusammensetzung nach einem der vorhergehenden Ansprüche, dadurch gekennzeichnet, daß der Cristobalitanteil in der Zusammensetzung 5 bis 40 Gew.-%, bezogen auf das Gesamtgewicht der Zusammensetzung beträgt.

6. Zusammensetzung nach einem der vorhergehenden Ansprüche, dadurch gekennzeichnet, daß sie zusätzlich ein organisches Bindemittel enthält.

7. Zusammensetzung nach Anspruch 8, dadurch gekennzeichnet, daß das organische Bindemittel ausgewählt wird aus Polymeren oder Copolymeren mit Ethylen-, Propylen-, Acrylat-, Methacrylat-, Styrol-, Vinyl-,Vinylacetat-,Vinylchlorid-,Butadien-,Epoxid-,Urethaneinheiten, Melamin-,Latex-,Siliconharzen, und glasfaserverstärkten Kunstoffen sowie deren Mischungen.

8. Zusammensetzung nach einem der vorhergehenden Ansprüche, dadurch gekennzeichnet, daß das anorganische Bindemittel aus Zementen, Mörtel, Gips, Anhydrid, Aluminiumphosphaten, Magnesitbinder und Hochofenschlacke ausgewählt wird.

9. Zusammensetzung nach einem der vorhergehenden Ansprüche, dadurch gekennzeichnet, daß sie Zuschlag- und Hilfsstoffe, ausgewählt aus Abbindebeschleunigern, Fließmitteln, Anti-Schrumpfungsmitteln, Wasserbindemitteln, Füllstoffen, Antischaummitteln und Pigmenten enthält

10. Verfahren zur Herstellung der anorganische Bindemittel enthaltenden Zusammensetzung nach einem der Ansprüche 1 bis 9, dadurch gekennzeichnet, daß Cristobalit mit einer Teilchengröße von 0,5 bis 500 µm als Dispersion oder Suspension eingebracht wird.

11. Verfahren nach Anspruch 12, dadurch gekennzeichnet, daß das Dispersions- oder Suspensionsmittel ausgewählt wird aus organischen und anorganischen Lösemittel, Kunstharzen, Weichmacher, Tensiden ausgewählt wird.

12. Verfahren nach Anspruch 12 oder 13, dadurch gekennzeichnet, daß das Dispersions- oder Suspensionsmittel ausgewählt wird aus Wasser, Methanol, Ethanol, Isopropanol Dietylether, Ethylenglykol, Propylenglykol, Ethylenglykoldimethyl- oder -diethylether, Acetaldehyd, Aceton, Methyl- oder Ethylacetat, Methylenchlorid, Trichlorethylen, 1,1,1-Trichlorethan, n-Hexan, Cyclohexan, Toluol, Dimethylformamid, Acetonitril, Phthalsäureestern, aliphatische Dicarbonsäureestern, Hydroxycarbonsäureestern, sowie deren verträglichen Mischungen.

13. Verfahren nach Anspruch 10 oder 11, dadurch gekennzeichnet, daß Cristobalit der Zusammensetzung in Pastenform zugegeben wird.

14. Verwendung der Zusammensetzung nach einem der Ansprüche 1 bis 9 zur Herstellung schnellhärtender Estriche.

15. Paste aus Cristobalit einer Teilchengröße von 0,5 bis 500 µm und einem Dispersions- oder Suspensionsmittel.

16. Paste nach Anspruch 15, dadurch gekennzeichnet, daß das Dispersions- oder Suspensionsmittel ausgewählt wird aus organischen und anorganischen Lösemitteln, Kunstharzen, Weichmachern und Tensiden.

17. Paste nach Anspruch 15, dadurch gekennzeichnet, daß das Suspensionsmittel Wasser, Alkohole, Ether, Glykole, Glykolether, Aldehyde, Ketone, halogenierte und nicht halogenierte Kohlenwasserstoffe, schwefel- und stickstoffhaltige Lösemittel eingesetzt werden können.

18. Paste nach Anspruch 15, dadurch gekennzeichnet, daß das Dispersions- oder Suspensionsmittel Polymere oder Copolymere mit Ethylen-, Propylen-, Acrylat-, Methacrylat-, Styrol-, Vinyl-, Vinylacetat-, Vinylchlorid-, Butadien-, Epoxid-, Urethaneinheiten, Melamin-, Latex-, Siliconharze, und glasfaserverstärkten Kunststoffe sowie deren Mischungen eingesetzt werden können.

19. Paste nach Anspruch 15, dadurch gekennzeichnet, daß als Suspensionsmittel geradkettige und cyclische Ammoniumverbindungen, Benzalkoniumchloride, quartäre Ammoniumchloride, Pyridiniumsalze, Alkylphenolpolyglykolether, Fettsäure-, Fettsäureamid-, Fettalkoholethoxylate, Fettsäureester von Polyalkoholen, Betaine und Sultaine sowie deren Mischungen eingesetzt werden können.

20. Paste nach Anspruch 15, dadurch gekennzeichnet, daß als Suspensionsmittel Phthalsäureester, Trimellitsäureester, aliphatische Dicarbonsäureester, Phosphorsäureester, Fettsäureester, Hydroxycarbonsäureester, epoxidierte Fettsäuren und Triglyceride, Benzolsulfonamide, p- Toluolsulfonamide und Polyester aus Adipin-, Sebacin-, Azelain- und Phthalsäure mit Diolen sowie deren Mischungen eingesetzt werden können.

21. Verwendung nach einem der vorhergehenden Ansprüche 15 bis 20 zur Herstellung schnellhärtender Mörtel und Estriche.
